# EUROPEAN PATENT SPECIFICATION

(11) **EP 4 288 911 B1**
(45) Date of publication and mention of the grant of the patent: **03.06.2026**
(21) Application number: 22785811.5
(22) Date of filing: 01.09.2022
(51) Int. Cl.: G06N 3/082, G06N 3/084, G06N 3/0464, G06N 3/0495, G06N 3/063, G06N 3/09, G06N 3/092, G06N 3/096

(54) **MULTIPLIER-LESS SPARSE DEEP NEURAL NETWORK TO PERFORM EQUALIZATION FOR A REAL-TIME FIBER-OPTIC SYSTEM**
MULTIPLIKATORLOSES SPÄRLICHES TIEFES NEURONALES NETZ ZUM DURCHFÜHREN EINER ENTZERRUNG FÜR EIN ECHTZEIT-FASEROPTISCHES SYSTEM
RÉSEAU NEURONAL PROFOND PEU DENSE SANS MULTIPLICATEUR POUR EFFECTUER UNE ÉGALISATION POUR UN SYSTÈME À FIBRE OPTIQUE EN TEMPS RÉEL

(30) Priority: 10.09.2021 US 202163242636 P; 28.03.2022 US 202217656742
(43) Date of publication of application: 13.12.2023
(73) Proprietor: MITSUBISHI ELECTRIC CORPORATION, Chiyoda-ku Tokyo 100-8310 (JP)
(72) Inventor: AKINO, Toshiaki, Cambridge, Massachusetts 02139-1955 (US)
(74) Representative: Pfenning, Meinig & Partner mbB
(86) International application number: PCT/JP2022/033627
(87) International publication number: WO 2023/038070

(56) References cited:
- WAN ZHIQUAN ET AL: "Nonlinear equalization based on pruned artificial neural networks for 112-Gb/s SSB-PAM4 transmission over 80-km SSMF", OPTICS EXPRESS, vol. 26, no. 8, 11 April 2018 (2018-04-11), pages 10631, XP055826355, Retrieved from the Internet <URL:https://www.osapublishing.org/DirectPDFAccess/7839682D-ABC1-4296-81C7C56429799FA4_385530/oe-26-8-10631.pdf?da=1&id=385530&seq=0&mobile=no> DOI: 10.1364/OE.26.010631
- KOIKE-AKINO TOSHIAKI ET AL: "Neural Turbo Equalization: Deep Learning for Fiber-Optic Nonlinearity Compensation", JOURNAL OF LIGHTWAVE TECHNOLOGY, IEEE, USA, vol. 38, no. 11, 27 February 2020 (2020-02-27), pages 3059 - 3066, XP011790446, ISSN: 0733-8724, [retrieved on 20200527], DOI: 10.1109/JLT.2020.2976479
- ALEX RENDA ET AL: "Comparing Rewinding and Fine-tuning in Neural Network Pruning", ARXIV.ORG, CORNELL UNIVERSITY LIBRARY, 201 OLIN LIBRARY CORNELL UNIVERSITY ITHACA, NY 14853, 5 March 2020 (2020-03-05), XP081614363
- JONATHAN FRANKLE ET AL: "Stabilizing the Lottery Ticket Hypothesis", ARXIV.ORG, CORNELL UNIVERSITY LIBRARY, 201 OLIN LIBRARY CORNELL UNIVERSITY ITHACA, NY 14853, 5 March 2019 (2019-03-05), XP081369971

## Description

### [Technical Field]

The present invention is related to a machine learning and inference system based on an artificial neural network, and more particularly to a multiplier-less method and system of a deep neural network with round-accumulate operation and weight pruning.

### [Background Art]

A machine learning based on a deep neural network (DNN) has been applied to many various issues including but not limited to image classification, speech recognition, computational sensing, data analysis, feature extraction, signal processing, and artificial intelligence. There are many DNN architectures such as multi-layer perceptron, recurrent network, convolutional network, transformer network, attention network, long short-term memory, generative adversarial network, auto-encoder, U-shaped network, residual network, reversible network, loopy network, clique network, and a variant thereof. Although a high performance of a DNN has been demonstrated in many practical systems, it has still been a challenge to train and deploy a DNN at a resource-limited hardware with a small memory and processing power for real-time applications. This is partly because the typical DNN has a large number of trainable parameters such as weights and biases, with many artificial neurons across deep hidden layers which also require a large number of arithmetic multiplication and floating-point operations.

In prior arts, some memory-efficient DNN methods and systems were proposed to resolve a part of the issue. One type of such approaches includes a pruning, sparcification, or compacting of weights and nodes. Another type of approaches is based on a quantization of weights and activations. Both of them are known as a network distillation technique. The weight pruning enforces some DNN weights to be zeros and the corresponding edges are eliminated to realize more compact DNN architectures. For example, L1/L2-regularization is used to realize sparse weights to compress the network size. Recently, another simple approach for weights pruning was proposed based on lottery ticket hypothesis (LTH). The LTH pruning uses a trained DNN to create a pruning mask, and rewinds the weights at early epochs for unpruned edges. It was shown that the LTH pruning can provide better performance with more compact DNNs.

The weight quantization compresses the DNN weights by converting a high-precision value into a low-precision value. For example, the DNN is first trained with floating-point weights of double precision, which typically requires 64 bits to represent, and then the weights are quantized to a half precision of 16 bits, or an integer value of 8 bits. This quantization can reduce the requirement of DNN memory by 4 or 8 folds for deployment, leading to low-power systems. Even weights binarization or ternalization is developed to realize low-memory DNNs. The binary DNN and ternery DNN show reasonable performance for some specific datasets, while they show performance loss in most real-world datasets. Another quantization technique includes rounding, vector quantization, codebook quantization, stochastic quantization, random rounding, adaptive codebook, incremental quantization, additive powers-of-two, or power-of-two quantization. Besides weights quantization, activations and gradients are quantized for some systems. In order to reduce performance degradation due to those network distillation, there are many training methods based on quantization/pruning-aware training besides dynamic quantization.

However, most distillation techniques suffer from a significant performance degradation due to the resource limitation in general. In addition, there is no integrated way to realize sparse and quantized DNN without losing performance. Accordingly, there is a need to develop a method and a system for a low-power and low-complexity deployment of a DNN applicable for a high-speed real-time processing.

The following publication concerns iterative magnitude pruning for deeper artificial neural networks: JONTHAN FRANKLE ET AL: "Stabilizing the Lottery Ticket Hypothesis", ARXIV.ORG, CORNELL UNIVERSITY LIBRARY, 201 OLIN LIBRARY CORNELL UNIVERSITY ITHACA, NY 14853, 5 March 2019 (2019-03-05).

The following publication concerns a pruning method of an artificial neural network based nonlinear equalizer (ANN-NLE) for single-sideband 4-ary pulse amplitude modulation (SSB-PAM4) in IM/DD system: WAN ZHIQUAN ET AL: "Nonlinear equalization based on pruned artificial neural networks for 112-Gb/s SSB-PAM4 transmission over 80-km SSMF", OPTICS EXPRESS, vol. 26, no. 8, 11 April 2018 (2018-04-11 ), page 10631, DOI: 10.1364/0E.26.010631.

The following publication concerns turbo equalization (TEQ) based on deep neural networks (DNN) as a framework to deal with nonlinear fiber impairments. The proposed DNN-TEQ is constructed with nested deep residual networks (ResNet) to train extrinsic likelihood given soft-information feedback from channel decoding: KOIKE-AKINO TOSHIAKI ET AL: "Neural Turbo Equalization: Deep Learning for Fiber-Optic Nonlinearity Compensation", JOURNAL OF LIGHTWAVE TECHNOLOGY, IEEE, USA, vol. 38, no. 11, 27 February 2020 (2020-02-27), pages 3059-3066, ISSN: 0733-8724, DOI: 10.1109/JL T.2020.2976479.

The following publication compares rewinding and fine-tuning in neural network pruning: ALEX RENDA ET AL: "Comparing Rewinding and Fine-tuning in Neural Network Pruning", ARXIV.ORG, CORNELL UNIVERSITY LIBRARY, 201 OLIN LIBRARY CORNELL UNIVERSITY ITHACA, NY 14853, 5 March 2020 (2020-03-05).

### [Summary of Invention]

The invention is defined in the attached independent claims.

A deep neural network (DNN) has been recently investigated for various applications including tele-communications, speech recognition, image processing and so on. Although a high potential of DNN has been successfully demonstrated in many applications, DNN generally requires high computational complexity and high power operation for real-time processing due to a large number of multiply-accumulate (MAC) operations. This invention provides hardware-friendly DNN framework with round-accumulate (RAC) operations to realize multiplier-less operations based on powers-of-two quantization or its variant. We demonstrate that quantization-aware training (QAT) for additive powers-of-two (APoT) weights can eliminate multipliers without causing visible performance loss. In addition, we introduce weight pruning based on a progressive version of lottery ticket hypothesis (LTH) to sparcify the over-parameterized DNN weights for further complexity reduction. It is demonstrated that the invention can prune most weights, leading to power-efficient inference for resource-limited hardware implementation such as micro processors or field-programmable gate arrays (FPGAs).

The method and system are based on the realization that rounding-aware training for powers-of-two expansion can eliminate the need of multiplier components from the system without causing significant performance loss. In addition, the method and system provide a way to reduce the number of PoT weights based on a knowledge distillation using a progressive compression of an over-parameterized DNN. It is can realize high compression, leading to power-efficient inference for resource-limited hardware implementation. A compacting rank is optimized with additional DNN model in a reinforcement learning framework. A rounding granularity is also successively decremented and mixed-order PoT weights are obtained for low-power processing. Another student model is also designed in parallel for a knowledge distillation to find a Pareto-optimal trade-off between performance and complexity.

The invention provides a way to realize low-complexity low-power DNN design which does not require multipliers. Our method uses progressive updates of LTH pruning and quantization-aware training. Hyperparameters are automatically optimized with Bayesian optimization. Multiple solutions are obtained by multi-seed training to find Pareto-optimal trade-off between performance and complexity. Pruning ranking is optimized with additional DNN model. Quantization granularity is also successively decremented and mixture-order APoT weights are obtained for low-power processing. Another student model derived from a parent model is also designed in parallel for knowledge distillation. Embodiments include digital pre-distortion, MIMO equalization, nonlinear turbo equalization etc.

Some embodiments of the present invention provide a hardware-friendly DNN framework for nonlinear equalization. Our DNN realizes multiplier-less operation based on powers-of-two quantization. We demonstrate that quantization-aware training (QAT) for additive powers-of-two (APoT) weights can eliminate multipliers without causing visible performance loss. In addition, we introduce weight pruning based on the lottery ticket hypothesis (LTH) to sparsify the over-parameterized DNN weights for further complexity reduction. We verify that progressive LTH pruning can prune most of the weights, yielding power-efficient inference in real-time processing.

In order to reduce the computational complexity of DNN computation, we integrate APoT quantization into a DeepShift framework. In the original DeepShift, DNN weights are quantized into a signed PoT as w = ±2*^{u},* where *u* is an integer to train. Note that the PoT weights can eliminate multiplier operations from DNN equalizers as it can be realized with bit shifting for fixed point precision or addition operation for floating point precision. The present invention further improves it with APoT weights: *w =* ±(2*^{u}* ± 2*^{v}*) where we use another trainable integer *v* < *u*. It requires an additional summation but no multiplication at all. In our QAT updating, we used a straight-through rounding to find *u* and *v* after each epoch iteration once the pre-training phase is done. For some embodiments, higher-order additive PoT is used to further reduce quantization errors.

Even though our DNN equalizer does not require any multipliers, it still needs a relatively large number of addition operations. We introduce a progressive version of the LTH pruning method to realize low-power sparse DNN implementation. It is known that an over-parameterized DNN can be significantly sparsified without losing performance and that sparsified DNN can often outperform the dense DNN. In the progressive LTH pruning according to the invention, we first train the dense DNN via QAT for APoT quantization, starting from random initial weights. We then prune a small percentage of the edges based on the trained weights. We re-train the pruned DNN after rewinding the weights to the early-epoch weights for non-pruned edges. Rewinding, QAT updating, and pruning are repeated with a progressive increase of the pruning percentages. We use late rewinding of the first-epoch weights.

Accordingly, the zero-multiplier sparse DNN can be used for many applications including high-speed optical communications employing probabilistic shaping. The APoT quantization can achieve floating point arithmetic performance without multipliers and progressive LTH pruning can eliminate 99% of the weights for power-efficient implementation in some embodiments.

According to some embodiments of the present invention, a computer-implemented method is provided for training a set of artificial neural networks. The method may be performed by one or more computing processors in association with a memory storing computer-executable programs. The method comprises the steps of: (a) initializing a set of trainable parameters of an artificial neural network, wherein the set of trainable parameters comprise a set of trainable weights and a set of trainable biases; (b) training the set of trainable parameters using a set of training data; (c) generating a pruning mask based on the trained set of trainable parameters; (d) rewinding the set of trainable parameters; (e) pruning a selected set of trainable parameters based on the pruning mask; and (f) repeating the above steps from (b) to (e) for a specified number of times to generate a set of sparse neural networks having an incremental sparsity.

Further, some embodiments of the present invention can provide a computer-implemented method for testing an artificial neural network. The method can be performed by one or more computing processors, comprises the steps of: feeding a set of testing data into a plurality of an input node of the artificial neural network; propagating the set of testing data across the artificial neural network according to a set of pruning masks; and generating a set of output values from a plurality of an output node of the artificial network.

Yet further, some embodiments provide a system deployed for an artificial neural network. The system includes at least one computing processor; at least one memory bank; at least one interface link; at least one trained set of trainable parameters of the artificial neural network; causing processors to execute training method and testing method based on the at least one trained set of trainable parameters; (a) initializing a set of trainable parameters of an artificial neural network, wherein the set of trainable parameters comprise a set of trainable weights and a set of trainable biases; (b) training the set of trainable parameters using a set of training data; (c) generating a pruning mask based on the trained set of trainable parameters; (d) rewinding the set of trainable parameters; (e) pruning a selected set of trainable parameters based on the pruning mask; and (f) repeating the above steps from (b) to (e) for a specified number of times to generate a set of sparse neural networks having an incremental sparsity.

Accordingly, the embodiments can realize multiplier-less sparse DNN computation with no performance degradation. It can be used for ultra high-speed real-time applications requiring low-power and limited-resource deployment.

The accompanying drawings, which are included to provide a further understanding of the invention, illustrate embodiments of the invention and together with the description, explaining the principle of the invention.

### [Brief Description of Drawings]

[Fig. 1 ]

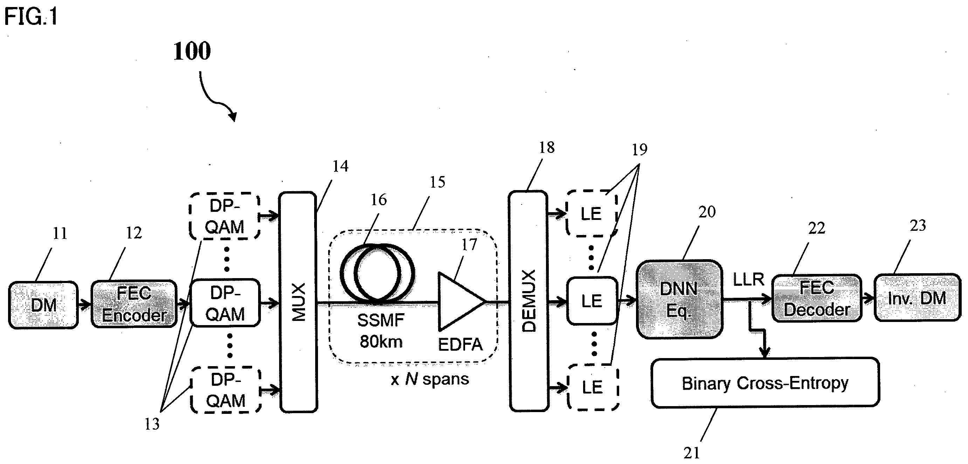

   Fig. 1 shows an exemplar system employing a sparse deep neural network according to some embodiments.
[Fig. 2]

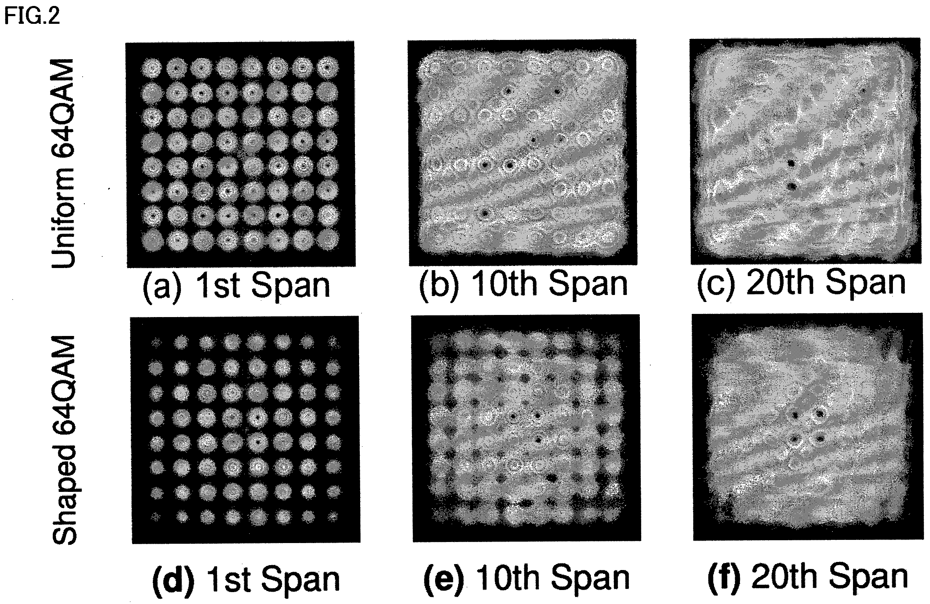

   Fig. 2 shows an exemplar signal diagram to denoise with a sparse deep neural network according to some embodiments.
[Fig. 3A]

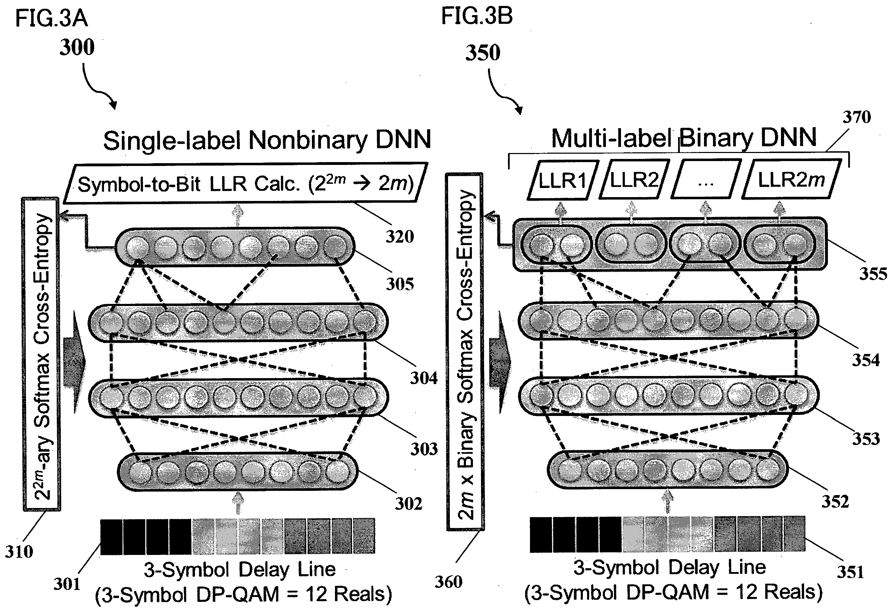

   Fig. 3A shows an exemplar deep neural network based on forward multi-layer perceptron architecture using different loss functions according to some embodiments.
[Fig. 3B]
   Fig. 3B shows an exemplar deep neural network based on forward multi-layer perceptron architecture using different loss functions according to some embodiments.
[Fig. 4]

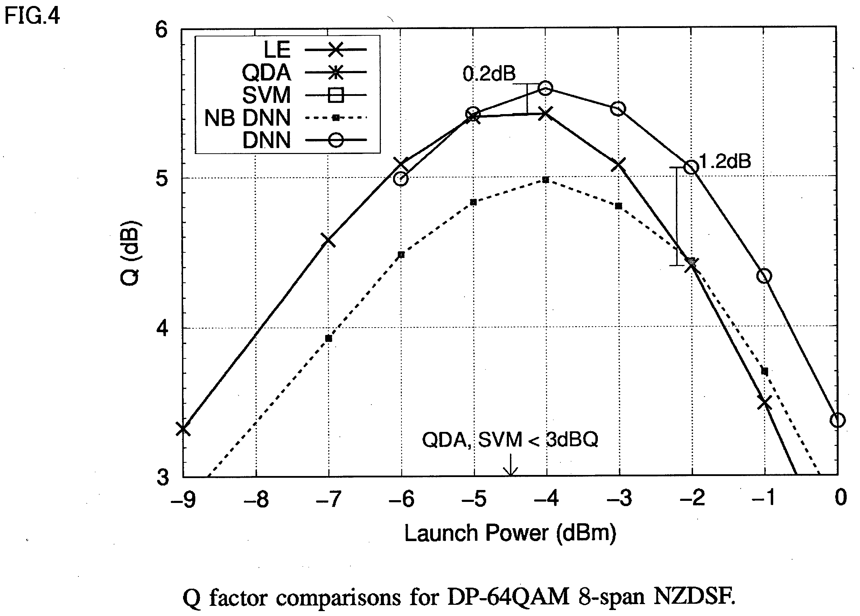

   Fig. 4 shows an exemplar performance with deep neural network using different loss functions according to some embodiments.
[Fig. 5]

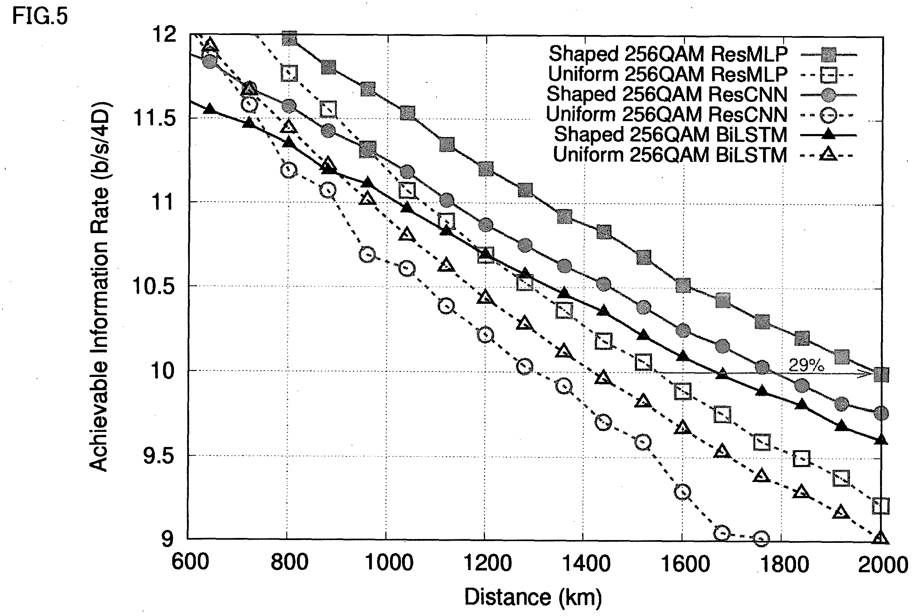

   Fig. 5 shows an exemplar performance with deep neural network using different architecture according to some embodiments.
[Fig. 6]

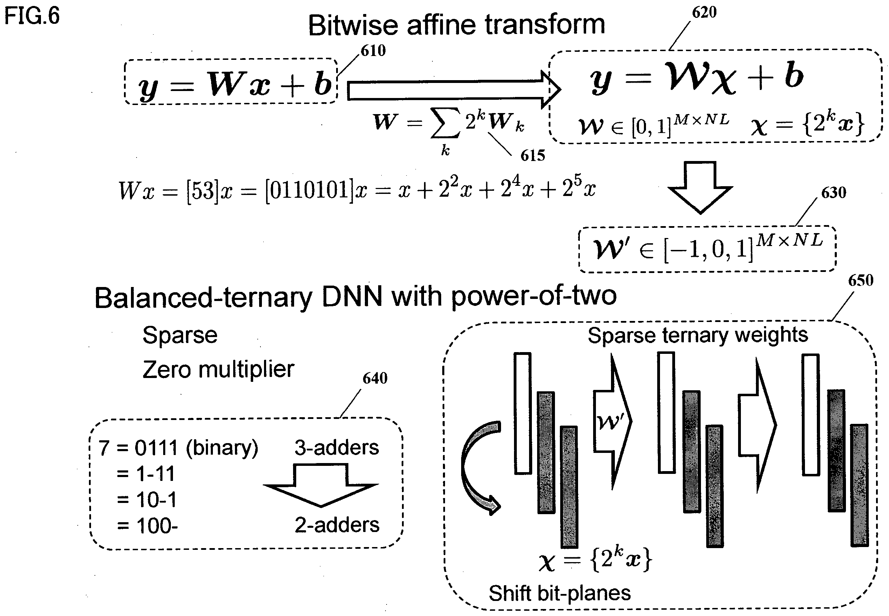

   Fig. 6 shows a multiplier-less affine transform with additive powers-of-two weights for quantized deep neural network according to some embodiments.
[Fig. 7A]

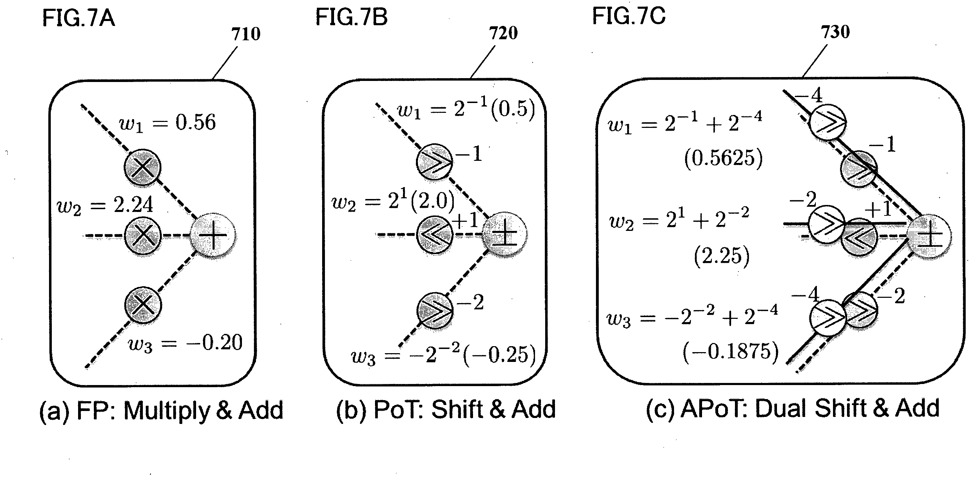

   Fig. 7A shows an exemplar operations for quantized affine transforms according to some embodiments.
[Fig. 7B]
   Fig. 7B shows an exemplar operations for quantized affine transforms according to some embodiments.
[Fig. 7C]
   Fig. 7C shows an exemplar operations for quantized affine transforms according to some embodiments.
[Fig. 8]

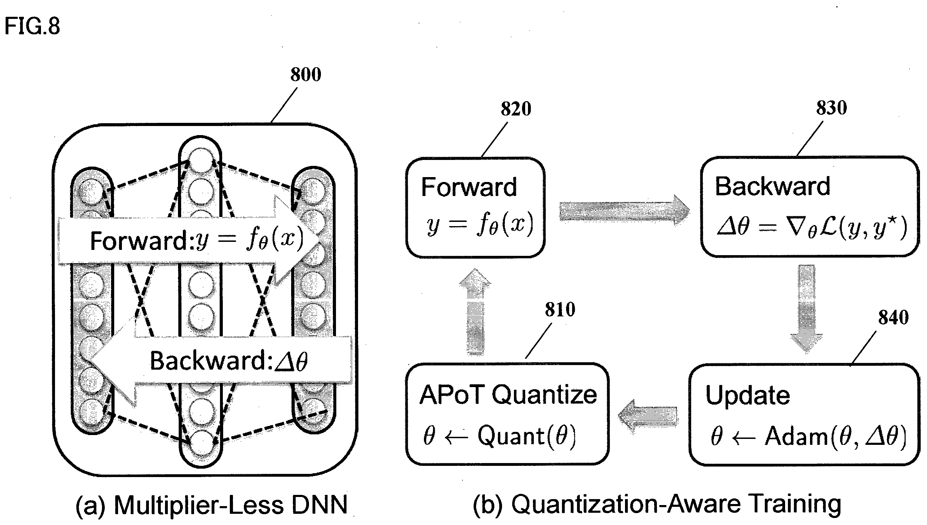

   Fig. 8 shows an exemplar schematic of quantization-aware optimization for multiplier-less affine transform with additive powers-of-two weights for quantized deep neural network according to some embodiments.
[Fig. 9]

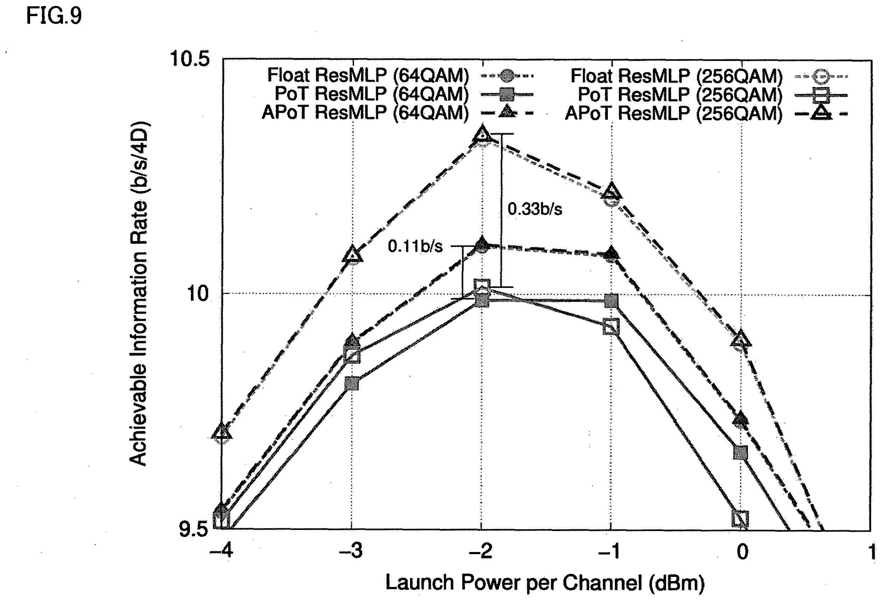

   Fig. 9 shows an exemplar performance of quantized deep neural network with different order of additive powers-of-two according to some embodiments.
[Fig. 10]

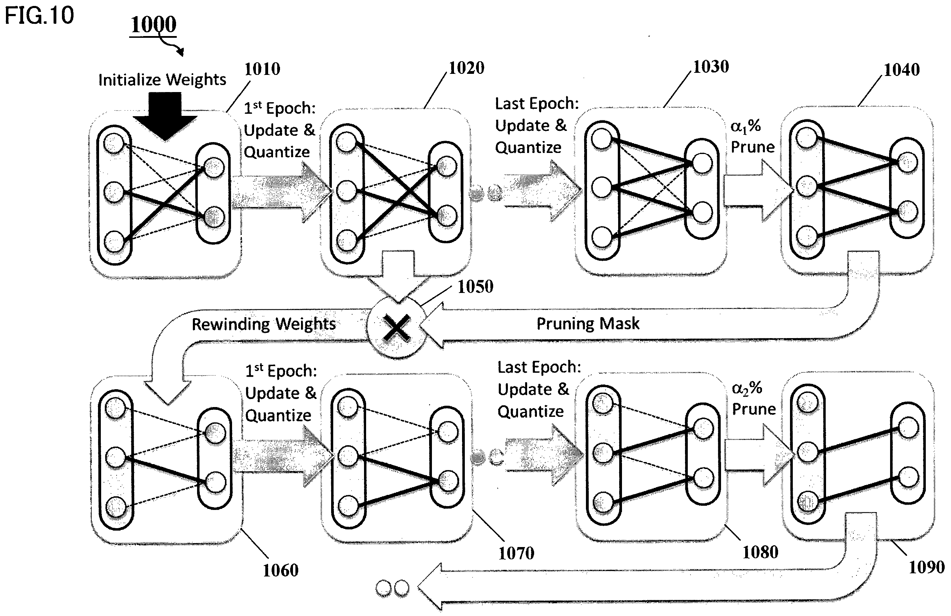

   Fig. 10 shows an exemplar schematic of progressive pruning for incremental sparsification according to some embodiments.
[Fig. 11]

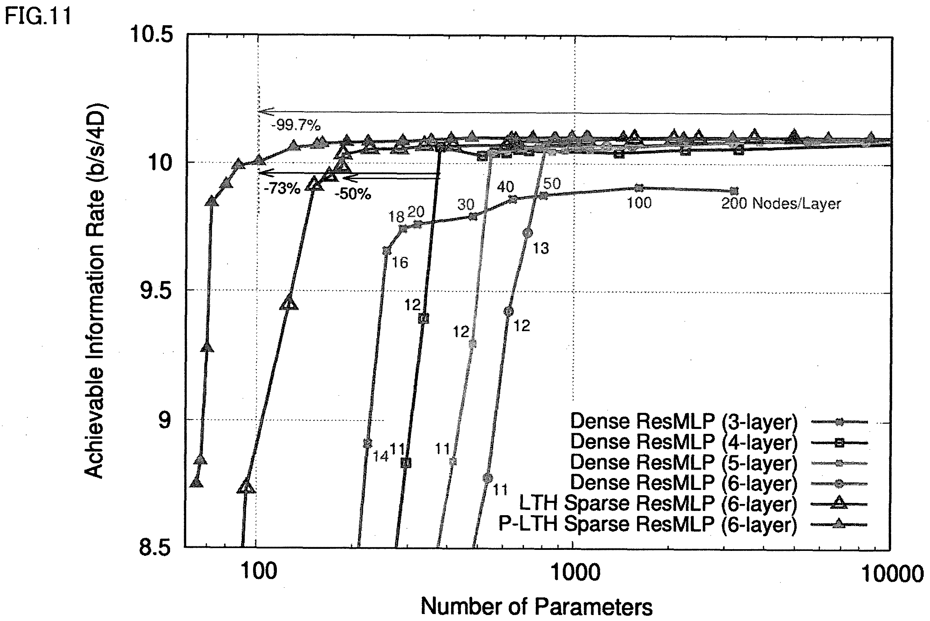

   Fig. 11 shows an exemplar performance of sparse deep neural network according to some embodiments.
[Fig. 12]

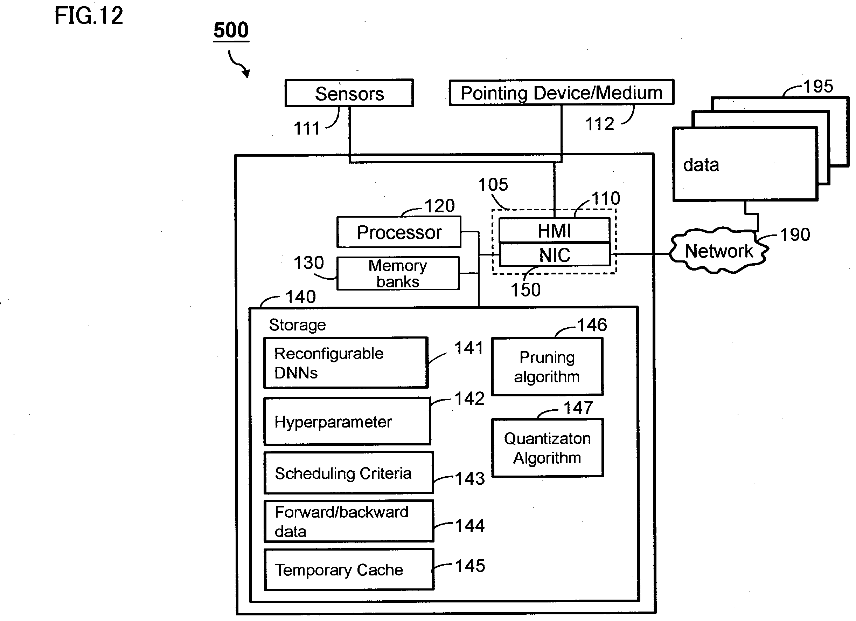

   Fig. 12 shows an exemplar system employing sparse quantized neural network according to some embodiments.

### [Description of Embodiments]

Various embodiments of the present invention are described hereafter with reference to the figures. It would be noted that the figures are not drawn to scale elements of similar structures or functions are represented by like reference numerals throughout the figures. It should be also noted that the figures are only intended to facilitate the description of specific embodiments of the invention. They are not intended as an exhaustive description of the invention or as a limitation on the scope of the invention. In addition, an aspect described in conjunction with a particular embodiment of the invention is not necessarily limited to that embodiment and can be practiced in any other embodiments of the invention.

The embodiments of the present disclosure provide a multiplier-less deep neural network (DNN) to mitigate fiber-nonlinear distortion of shaped constellations. The novel DNN achieves an excellent performance-complexity trade-off with progressive lottery ticket hypothesis (LHT) weight pruning and additive powers-of-two (APoT) quantization.

### DNN Equalization for Probabilistic Amplitude Shaping (PAS) QAM Systems

The optical communications system 100 under consideration is depicted in Fig. 1. The figure is an exemplar system employing a sparse deep neural network (DNN) according to some embodiments of the present invention. A transmitter side may use a distribution matcher (DM) 11 and forward error correction (FEC) coding 12 such as low-density parity-check (LDPC) or turbo codes. Eleven-channel dual-polarization quadrature-amplitude modulations (DP-QAM) 13 for 34 GBaud and 35 GHz spacing are multiplexed (MUX) 14 to be sent over fiber plants towards coherent receivers. In some embodiments, we consider *N* spans of dispersion unmanaged links 15 with 80 km standard single-mode fiber (SSMF) 16. The SSMF 16 may typically have a dispersion parameter of *D* = 17 ps/nm/km, a nonlinear factor of *γ* = 1.2 /W/km, and an attenuation of 0.2 dB/km. The span loss is compensated by Erbium-doped fiber amplifiers (EDFA) 17 with a noise figure of 5 dB. We may use digital root-raised cosine filters with 2 % rolloff at both transmitter and receiver for Nyquist band-limited pulse-shaping. The receiver employs standard digital signal processing with symbol synchronization, carrier-phase recovery, dispersion compensation, and polarization recovery with 61 -tap linear equalization (LE) 19 after demultiplexing (DEMUX) 18. The residual distortion is compensated by a DNN equalization 20, which generates log-likelihood ratio (LLR) values for FEC decoder 22 followed by inverse DM 23. The LLR values are also used to calculate loss values such as binary cross-entropy loss 21 to train DNN parameters. For some embodiments, the FEC decoding output is further fed back into the DNN equalization as a turbo iteration to improve the performance.

Due to fiber nonlinearity, residual distortion after LE will limit the achievable information rates and degrade the bit error rate performance. Fig. 2 shows an exemplar signal diagram to denoise with a sparse deep neural network according to some embodiments. The figure shows distorted DP-64QAM constellation after least-squares LE 19 for 1-/ 10 -/ 20 -span transmissions. Here, we compare uniform QAM and shaped QAM, which uses distribution matcher (DM) 11 for probabilistic amplitude shaping (PAS) following Maxwell-Boltzmann distribution; Pr(*xᵢ*) ∝ exp(-*λ* | *xᵢ* |²) with *λ* = 2 . We can observe that the shaped constellation is more distinguishable as the Euclidean distance is increased because of a reduced entropy (11.51 b/s/4D symbol).

Fig. 3A and Fig. 3B show an exemplar deep neural network based on forward multi-layer perceptron architecture using different loss functions according to some embodiments. Fig. 3A uses a single-label nonbinary cross-entropy loss 310, and Fig. 3B uses multi-label binary cross-entropy loss 360. To mitigate nonlinear distortion, the invention use DNN architecture which is configured with multiple layers with artificial neurons. Specifically, input layers 302, 352, the first hidden layers 303, 353, the second hidden layers 304, 354, and output layers 305, 355, may be used to configure DNN. The input layers 302, 352 may take a few adjacent symbols using a finite-length window of received sequences through a dely line 301, 351. Depending on loss functions, a post-processing of the output values may be required. For example, the DNN 300 using nonbinary cross entropy requires symbol-to-bit LLR convertor 320, while the DNN 350 using binary cross entropy can use the output layer as a direct LLR value 370 without using convertor.

To train the DNN, various different loss functions can be used, including but not limited to softmax cross entropy, binary cross entropy, distance, mean-square error, mean absolute error, connectionist temporal classification loss, negative log-likelihood, Kullback-Leibler divergence, margin loss, ranking loss, embedding loss, hinge loss, Huber loss, and so on. Specifically, the trainable parameters of DNN architecture are trained by some steps of operations: feeding a set of training data into the input nodes of the DNN; propagating the training data across layers of the DNN; pruning trainable parameters according to some pruning masks; and generating output values from output nodes of the DNN; calculating loss values for the training data; updating the trainable parameters based on the loss values through a backward message passing; and repeating those steps for a specified number of iteration times.

Fig. 4 shows an exemplar performance with deep neural network using different loss functions according to some embodiments. For post nonlinearity compensation, binary cross entropy loss can outperform nonbinary cross entropy loss to train the DNN, especially for high-order modulation cases.

To compensate for the residual nonlinear distortion, we use DNN-based equalizers, which directly generate bit-wise soft-decision log-likelihood ratios (LLRs) for the decoder. Fig. 5 shows an exemplar performance with deep neural network using different architecture according to some embodiments. The figure shows an exemplar performance with deep neural network using different architecture according to some embodiments. The figure shows the achievable rate of DP-256QAM across SSMF spans for various DNN equalizers; residual multi-layer perceptron ( 6 -layer 100 -node ResMLP), residual convolutional neural network ( 4 -layer kernel- 3 ResCNN), and bidirectional long short-term memory (2-layer 100-memory BiLSTM). Binary cross entropy loss is minimized via adaptive momentum (Adam) with a learning rate of 0.001 for 2,000 epochs over 2¹⁶ training symbols to evaluate 2¹⁴ distinct testing symbols. For some embodiments, besides Adam, the optimization algorithms are based on stochastic gradient descent, Nesterov gradient, resilient backpropagation, root-mean-square propagation, Broyden-Fletcher-Goldfarb-Shanno (BFGS) algorithm, adaptive momentum optimization, adaptive delta, and so on. The optimizers have hyperparameters including learning rate and decay, which are controled by a parameter scheduling method such as exponential decaying or step functions. For ResMLP, it is seen that the constellation shaping can achieve a reach extension by 29% for a target rate of 10 b/s. We found that the use of more hidden layers for CNN and LSTM architectures will further improve the training performance, while degrading testing performance due to over-fitting. It suggests that even larger size of training data is required to offer better performance for deeper models.

### Zero-Multiplier DNN with Additive Powers-of-Two (APoT) Quantization

In order to reduce the computational complexity of DNN for real-time processing, the present invention prodives a way to integrate APoT quantization into a DeepShift framework. In the original DeepShift, DNN weights are quantized into a signed PoT as *w* = ±2*^{u}* , where *u* is an integer to train. Note that the PoT weights can fully eliminate multiplier operations from DNN equalizers as it can be realized with bit shifting for fixed-point precision or addition operation for floating-point (FP) precision.

Fig. 6 shows a multiplier-less affine transform with additive powers-of-two (APoT) weights for quantized deep neural network according to some embodiments. Most DNNs including linear layers and convolutional layers require affine transforms 610 to propagate values across layers. Typically, the affine transform requires a matrix-vector multiplication, which may be implemented with multiply-accumurate operations. When the affine weight matrix is represented with APoT 615, the matrix-vector multiplication for the affine transform 620 can be realized by balanced ternery DNN 630 witch does not require multiplications but bit-plane expansion 650 with bit-shifting and accumulation operations. More importantly, the balanced ternery DNN 630 has a potential to reduce the number of addition operations 640 because of the increased degress of freedom.

Fig. 7A, Fig. 7B and Fig. 7C show an exemplar operations for quantized affine transforms according to some embodiments. The typical affine transform requires multiply and accumulate operations as shown in Fig. 7A, while PoT used in DeepShift framework can eliminate the multiplication operatins by shift-and-acumulation operations 720. We further improve the DeepShift by using APoT weights, i.e., *w* = ±(2*^{u}* + 2*^{v}*), where we use another trainable integer *v* < *u .* It requires an additional summation as shown in Fig. 7C, but no multiplication likewise PoT. Using APoT weights, we can significantly decrease the residual quantization error of the conventional PoT as depicted in Fig. 7C compared to Fig. 7B. Note that the original APoT uses a deterministic non-trainable look-up table, whereas our invention extends it as an improved DeepShift with trainable APoT weights through the use of QAT. For some embodiments, how to quantize the weights is based on power-of-two, additive powers-of-two, power-of-three, additive powers-of-three, table look-up, vector quantization and so on. The multiplication-less operations can realize a high-speed low-power real-time DNN operation. The order of additive powers-of-two, i.e., how many shift operations per weight value, can be adaptive according to the requirement of accuracy for some embodiments.

Fig. 8 shows an exemplar schematic of quantization-aware optimization for multiplier-less affine transform with additive powers-of-two weights for quantized deep neural network according to some embodiments. Fig. 8 includes (a) Multiplier-Less DNN 800 and (b) Quantization-Aware Training (QAT) process. For the DNN 800, the signal is propagated in forward way to calculate loss and backward way to update the weights with loss gradient. In the QAT updating, we use a straight-through rounding to find dual bit-shift integers *u* and *v* after each epoch iteration for some embodiments. Specifically, the DNN output is calculated through a forward propagation 820, and the loss gradient is backpropagated 830. After updating the trainable parameters such as weights and biases through optimizatin step like Adam 840, the updated parameters are quantized with APoT operation 810. For some embodimens, we may use a pre-training phase before the QAT fine-tuning in order to stabilize the DNN learning. For yet another embodiment, the DNN uses hypernetwork and feature-wise linear modulation (FiLM) to control the affinite transform for online adaptation, and those hypernetworks are also quantized in the similar way of QAT. In some embodiments, the gradient values in backward propagation are further quantized with APoT to reduce the computational complexity of QAT.

Fig. 9 shows an exemplar performance of quantized deep neural network with different order of additive powers-of-two according to some embodiments. The figure illustrates the achievable rate across launch power at the 22 nd span for 6 -layer 100 -node ResMLP. PoT quantization has a small degradation of 0.11 b/s compared to FP precision DNN equalizer for shaped DP-64QAM, whereas a considerable loss of 0.33 b/s is seen for shaped DP-256QAM. Notably, our multiplier-less DNN with APoT quantization has no degradation (but slight improvement) from FP precision. This is a great advantage in practice for real-time fiber nonlinearity compensation as there is no performance loss yet no multipliers are required.

### Lottery Ticket Hypothesis (LTH) Pruning for Sparse DNN

Even though our DNN equalizer does not require any multipliers, it still needs a relatively large number of addition operations due to the over-parameterized DNN architecture having huge number of trainable weights. We introduce a progressive version of the LTH pruning method to realize low-power sparse DNN implementation. It is known that an over-parameterized DNN can be significantly sparsified without losing performance and that sparsified DNN can often outperform the dense DNN in LTH. Fig. 10 shows an exemplar schematic of progressive pruning 1000 for incremental sparsification according to some embodiments. The figure illustrates the progressive LTH pruning. We first train the dense DNN via QAT for APoT quantization, starting from random initial weights 1010 over a finite number of epochs 1020 towards the last update 1030. We then prune a small percentage of the edges 1040 based on the trained weights to generate a pruning mask. We re-train the pruned DNN after rewinding the weights to the early-epoch weights for non-pruned edges according to the pruning mask 1050. Rewinding 1060, QAT updating 1070 over multiple epochs 1080, and pruning 1090 are repeated with a progressive increase of the pruning percentages. For some embodiments, we use late rewinding of the later-epoch weights. For some embodiments, the control of the incremental sparcification is adjusted by another auxiliary neural network trained by multiple trainng episodes through a deep reinforcement learning framework. The process is formulated as steps of: initializing trainable weights and biases of DNN; training those trainable parameters using training data; generating a pruning mask based on the trained parameters; rewinding the trainable parameters; pruning a selected parameters based on the pruning mask; and repeating those steps for a specified number of times to generate a set of sparse DNN having an incremental sparsity.

Fig. 11 is an exemplar performance of sparse deep neural network according to some embodiments. The figure shows a trade-off between the achievable rate and the number of non-zero weights. For dense DNNs, more hidden nodes and more hidden layers can improve the performance in general, at the cost of computational complexity. In consequence, a moderate depth such as 4 -layer DNN can be best in the Pareto sense of the performance-complexity trade-off in low-complexity regimes. The LTH pruning can significantly improve the trade-off, i.e., the sparse DNNs can achieve more than 50% complexity reduction over the dense DNNs to achieve a target rate of 10 b/s. Using the progressive pruning, we can prune more than 99% of the weights of 6 -layer 100-node ResMLP to maintain 10 b/s. Consequently, the sparse DNNs can be significantly lower-complex than the best dense DNNs by 73% and 87% for shaped 64QAM and 256QAM, respectively.

As discussed above, various DNN equalizers are provided for nonlinear compensation in optical fiber communications employing probabilistic amplitude shaping. We then proposed a zero-multiplier sparse DNN equalizer based on trainable version of APoT quantization and LTH pruning techniques. We showed that APoT quantization can achieve floating-point arithmetic performance without using any multipliers, whereas the conventional PoT quantization suffers from a severe penalty. We also demonstrated that the progressive LTH pruning can eliminate 99 % of the weights, enabling highly power-efficient implementation of DNN equalization for real-time fiber-optic systems.

Fig. 12 shows an exemplar system 500 employing sparse quantized neural network according to some embodiments. The system 500 may be referred to as a sparse quantized neural network system. The system 500 may include at least one computing processor 120, at least one memory bank 130, at least one interface link 105 that may include HMI 110, NIC 150 or the combination of HMI 110 and NIC 150. Further the system 500 may include a storage 140 that stores computer executable program and at least one set of trainable parameters of the artificial neural network, which includes reconfigurable DNNs 141, hyperparameter 142, scheduling criteria 143, forward/backward data 144, temporary cache 145, pruning algorithm 146 and quantization algorithm 147.

When the computer executable program is performed by the at least one computing processor 120, the program causes the at least one processor to execute a training method and testing method based on the at least one trained set of trainable parameters; (a) initializing a set of trainable parameters of an artificial neural network, wherein the set of trainable parameters comprise a set of trainable weights and a set of trainable biases; (b) training the set of trainable parameters using a set of training data; (c) generating a pruning mask based on the trained set of trainable parameters; (d) rewinding the set of trainable parameters; (e) pruning a selected set of trainable parameters based on the pruning mask; and (f) repeating the above steps from (b) to (e) for a specified number of times to generate a set of sparse neural networks having an incremental sparsity.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Also, the embodiments of the invention may be embodied as a method, of which an example has been provided. Accordingly, embodiments may be constructed in which acts are performed in an order different than illustrated, which may include performing some acts simultaneously, even though shown as sequential acts in illustrative embodiments.

Use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A computer-implemented method for training a set of artificial neural networks to perform equalization for a real-time fiber-optic system, performed by at least one computing processor, wherein the method uses the at least one processor coupled with a memory storing instructions implementing the method, wherein the instructions, when executed by the at least one processor, carry out steps of the method, comprising:
(a) initializing (1010) for each artificial neural network of the set of artificial neural networks a set of trainable parameters of the artificial neural network, wherein the set of trainable parameters comprise a set of trainable weights and a set of trainable biases;
(b) training (1020, 1030) the set of trainable parameters using a set of training data, the training data comprising an input having a residual nonlinear distortion and an output in which this distortion is compensated, with the output taking the form of log-likelihood ratios, LLRs;
(c) generating a pruning mask based on the trained set of trainable parameters;
(d) rewinding (1050) the set of trainable parameters;
(e) pruning (1040) a selected set of trainable parameters based on the pruning mask; and
(f) repeating the above steps from (b) to (e) for a specified number of times to generate a set of sparse neural networks having an incremental sparsity,
wherein the method further comprises: using the set of artificial neural networks to perform equalization for the real-time fiber-optic system,
wherein the equalization is performed by the set of artificial neural networks receiving an input having a residual nonlinear distortion and generating an output in which this residual nonlinear distortion is compensated,
wherein the output takes the form of log-likelihood ratios, LLRs.

2. The method of claim 1,
wherein the LLRs are input to a forward error correction decoder (22) that is followed by an inverse distribution matcher (11).

3. The method of claim 1 or 2,
wherein the input having the residual nonlinear distortion is received from a linear equalizer (19).

4. The method of any of the previous claims, wherein the training of each artificial neural network of the set of artificial neural networks further comprises the steps of:
feeding the set of training data into a plurality of Z input nodes of the artificial neural network;
propagating the set of training data across the artificial neural network according to the pruning mask and the trainable parameters; and
generating a set of output values from a plurality of output nodes of the artificial neural network;
calculating a set of loss values for the set of training data based on the set of output values;
updating the set of trainable parameters based on the set of loss values through a backward message passing; and
repeating the above steps for a specified number of iteration times,
in particular
a) wherein the updating the set of trainable parameters is based on stochastic gradient descent, resilient backpropagation, root-mean-square propagation, Broyden-Fletcher-Goldfarb-Shanno algorithm, adaptive momentum optimization, adaptive subgradient, adaptive delta, or a variant thereof, or
b) wherein the updating the set of trainable parameters further comprises the step of rounding the trainable weights to quantize values based on power-of-two, additive powers-of-two, power-of-three, additive powers-of-three, or a variant thereof.

5. The method of any of the previous claims, wherein the set of loss values is based on mean-square error, mean absolute error, cross entropy, connectionist temporal classification loss, negative log-likelihood, Kullback-Leibler divergence, margin loss, ranking loss, embedding loss, hinge loss, Huber loss, or a variant thereof.

6. A system deployed for a set of aritificial networks to perform equalization for a real-time fiber-optic system comprises:
at least one interface link (105);
at least one computing processor (120);
at least one memory bank (130) configured to at least one trained set of trainable parameters of each artificial neural network of the set of artificial networks and a training method and a testing method, wherein the training method and the testing method use the at least one processor (120) coupled with the at least one memory bank (130) storing instructions implementing the training and testing methods, wherein the instructions, when executed by the at least one processor (120), carry out steps of the methods, comprising;
causing the at least one processor (120) to execute the training method and the testing method based on the at least one trained set of trainable parameters;
(a) initializing (1010) a set of trainable parameters of an artificial neural network, wherein the set of trainable parameters comprise a set of trainable weights and a set of trainable biases;
(b) training (1020, 1030) the set of trainable parameters using a set of training data, the training data comprising an input having a residual nonlinear distortion and an output in which this distortion is compensated, with the output taking the form of log-likelihood ratios, LLRs;
(c) generating a pruning mask based on the trained set of trainable parameters;
(d) rewinding (1050) the set of trainable parameters;
(e) pruning (1040) a selected set of trainable parameters based on the pruning mask; and
(f) repeating the above steps from (b) to (e) for a specified number of times to generate a set of sparse neural networks having an incremental sparsity,
wherein the instructions, when executed by the at least one processor (120), further carry out the step of: using the set of artificial neural networks to perform equalization for the real-time fiber-optic system,
wherein the equalization is performed by the set of artificial neural networks receiving an input having a residual nonlinear distortion and generating an output in which this residual nonlinear distortion is compensated,
wherein the output takes the form of log-likelihood ratios, LLRs.

7. The system of claim 6, wherein the LLRs are input to a forward error correction decoder (22) that is followed by an inverse distribution matcher (11).

8. The system of claim 6 or 7,
wherein the input having the residual nonlinear distortion is received from a linear equalizer (19).

9. The system of any of claims 6 to 8, wherein each artificial neural network of the set of artificial neural networks is parallelized and serialized.

10. The system of any of claims 6 to 9, each artificial neural network of the set of artificial neural networks uses a set of pruning masks to reduce arithmetic operations.

11. The system of any of claims 6 to 10, wherein each artificial neural network of the set of artificial neural networks uses a set of quantized parameters, said parameters being weights, to reduce arithmetic multiplication operations using power-of-two, additive powers-of-two, power-of-three, additive powers-of-three, or a variant thereof.

## Patentansprüche

1. Computerimplementiertes Verfahren zum Trainieren eines Satzes künstlicher neuronaler Netze, um eine Entzerrung für ein faseroptisches Echtzeitsystem durchzuführen, das von mindestens einem Rechenprozessor durchgeführt wird, wobei das Verfahren den zumindest einen Prozessor nutzt, der mit einem Speicher gekoppelt ist, der Anweisungen speichert, die das Verfahren implementieren, wobei die Anweisungen, wenn sie von dem zumindest einen Prozessor ausgeführt werden, Schritte des Verfahrens ausführen, umfassend:
(a) Initialisieren (1010) eines Satzes trainierbarer Parameter des künstlichen neuronalen Netzes für jedes künstliche neuronale Netz des Satzes künstlicher neuronaler Netze, wobei der Satz trainierbarer Parameter einen Satz trainierbarer Gewichte und einen Satz trainierbarer Abweichungen umfasst;
(b) Trainieren (1020, 1030) des Satzes trainierbarer Parameter unter Verwendung eines Satzes von Trainingsdaten, wobei die Trainingsdaten eine Eingabe, die eine restliche nichtlineare Verzerrung aufweist, und eine Ausgabe umfassen, worin diese Verzerrung kompensiert ist, wobei die Ausgabe die Form von Log-Likelihood-Verhältnissen, LLRs, annimmt;
(c) Erzeugen einer Ausdünnungs-Maske auf der Grundlage des trainierten Satzes von trainierbaren Parametern;
(d) Zurücksetzen (1050) des Satzes der trainierbaren Parameter;
(e) Ausdünnen (1040) eines ausgewählten Satzes trainierbarer Parameter auf der Grundlage der Ausdünnungs-Maske; und
(f) Wiederholen der obigen Schritte von (b) bis (e) für eine spezifizierte Anzahl von Malen, um einen Satz von spärlichen neuronalen Netzen zu erzeugen, die eine inkrementelle Spärlichkeit aufweisen,
wobei das Verfahren ferner umfasst: Verwenden des Satzes künstlicher neuronaler Netze zur Durchführung von Entzerrung für das faseroptische Echtzeitsystem,
wobei die Entzerrung durch den Satz künstlicher neuronaler Netze durchgeführt wird, die eine Eingabe empfangen, die eine restliche nichtlineare Verzerrung aufweist, und eine Ausgabe erzeugen, in der diese restliche nichtlineare Verzerrung kompensiert ist,
wobei die Ausgabe die Form von Log-Likelihood-Verhältnissen, LLRs, annimmt.

2. Verfahren nach Anspruch 1, wobei die LLRs in einen Vorwärtsfehlerkorrekturdecoder (22) eingegeben werden, dem ein inverser Verteilungsanpasser (11) folgt.

3. Verfahren nach Anspruch 1 oder 2, wobei die Eingabe, welche die restliche nichtlineare Verzerrung aufweist, von einem linearen Entzerrer (19) empfangen wird.

4. Verfahren nach einem der vorhergehenden Ansprüche, wobei das Training jedes künstlichen neuronalen Netzes des Satzes künstlicher neuronaler Netze ferner die folgenden Schritte umfasst:
Einspeisen des Satzes von Trainingsdaten in eine Vielzahl von Eingabeknoten des künstlichen neuronalen Netzes;
Verbreiten des Satzes von Trainingsdaten über das künstliche neuronale Netz gemäß der Ausdünnungs-Maske und den trainierbaren Parametern; und
Erzeugen eines Satzes von Ausgabewerten aus einer Vielzahl von Ausgabeknoten des künstlichen neuronalen Netzes;
Berechnen eines Satzes von Verlustwerten für den Satz von Trainingsdaten auf der Grundlage des Satzes von Ausgabewerten;
Aktualisieren des Satzes trainierbarer Parameter auf der Grundlage des Satzes von Verlustwerten durch eine Rückwärtsnachrichtenübermittlung; und
Wiederholen der vorherigen Schritte für eine spezifizierte Anzahl von Iterationen, insbesondere
a) wobei die Aktualisierung des Satzes trainierbarer Parameter auf stochastischem Gradientenabstieg, Resilient Backpropagation, Root-Mean-Square-Propagation, Broyden-Fletcher-Goldfarb-Shanno-Algorithmus, adaptiver Momentum-Optimierung, adaptivem Subgradienten, adaptivem Delta oder einer Variante davon basiert, oder
b) wobei das Aktualisieren des Satzes trainierbarer Parameter ferner den Schritt des Rundens der trainierbaren Gewichte umfasst, um Werte auf der Grundlage von Zweierpotenzen, additiven Zweierpotenzen, Dreierpotenzen, additiven Dreierpotenzen oder einer Variante davon zu quantisieren.

5. Verfahren nach einem der vorhergehenden Ansprüche, wobei der Satz von Verlustwerten auf dem mittleren quadratischen Fehler, dem mittleren absoluten Fehler, der Kreuzentropie, dem konnektionistischen temporalen Klassifikationsverlust, der negativen Log-Likelihood, der Kullback-Leibler-Divergenz, dem Margenverlust, dem Rangfolgeverlust, dem Einbettungsverlust, dem Scharnierverlust, dem Huber-Verlust oder einer Variante davon basiert.

6. System, das für einen Satz von künstlichen Netzen eingesetzt wird, um eine Entzerrung für ein faseroptisches Echtzeitsystem durchzuführen, und das umfasst:
zumindest eine Schnittstellenverbindung (105);
zumindest einen Rechenprozessor (120);
zumindest eine Speicherbank (130), die für zumindest einen trainierten Satz trainierbarer Parameter jedes künstlichen neuronalen Netzes des Satzes künstlicher Netze eingerichtet ist, und ein Trainingsverfahren und ein Testverfahren, wobei das Trainingsverfahren und das Testverfahren den zumindest einen Prozessor (120) verwenden, der mit der zumindest einen Speicherbank (130) gekoppelt ist, die Anweisungen speichert, die die Trainings- und Testverfahren implementieren,
wobei die Anweisungen bei Ausführung durch den zumindest einen Prozessor (120) Schritte des Verfahrens ausführen, umfassend;
Veranlassen des zumindest einen Prozessors (120) zur Ausführung des Trainingsverfahrens und des Testverfahrens auf der Grundlage des zumindest einen trainierten Satzes trainierbarer Parameter;
(a) Initialisieren (1010) eines Satzes trainierbarer Parameter eines künstlichen neuronalen Netzes, wobei der Satz trainierbarer Parameter einen Satz trainierbarer Gewichte und einen Satz trainierbarer Abweichungen umfasst;
(b) Trainieren (1020, 1030) des Satzes trainierbarer Parameter unter Verwendung eines Satzes von Trainingsdaten, wobei die Trainingsdaten eine Eingabe, die eine restliche nichtlineare Verzerrung aufweist, und eine Ausgabe umfassen, worin diese Verzerrung kompensiert ist, wobei die Ausgabe die Form von Log-Likelihood-Verhältnissen, LLRs, annimmt;
(c) Erzeugen einer Ausdünnungs-Maske auf der Grundlage des trainierten Satzes von trainierbaren Parametern;
(d) Zurücksetzen (1050) des Satzes der trainierbaren Parameter;
(e) Ausdünnen (1040) eines ausgewählten Satzes trainierbarer Parameter auf der Grundlage der Ausdünnungs-Maske; und
(f) Wiederholen der obigen Schritte von (b) bis (e) für eine spezifizierte Anzahl von Malen, um einen Satz von spärlichen neuronalen Netzen zu erzeugen, die eine inkrementelle Spärlichkeit aufweisen,
wobei die Anweisungen, wenn sie von dem mindestens einen Prozessor (120) ausgeführt werden, ferner den folgenden Schritt ausführen: Verwenden des Satzes künstlicher neuronaler Netze, um eine Entzerrung für das faseroptische Echtzeitsystem durchzuführen,
wobei die Entzerrung durch den Satz künstlicher neuronaler Netze durchgeführt wird, die eine Eingabe empfangen, die eine restliche nichtlineare Verzerrung aufweist, und eine Ausgabe erzeugen, in der diese restliche nichtlineare Verzerrung kompensiert ist, wobei die Ausgabe die Form von Log-Likelihood-Verhältnissen, LLRs, annimmt.

7. System nach Anspruch 6, wobei die LLRs in einen Vorwärtsfehlerkorrekturdecoder (22) eingegeben werden, dem ein inverser Verteilungsanpasser (11) folgt.

8. System nach Anspruch 6 oder 7, wobei die Eingabe, welche die restliche nichtlineare Verzerrung aufweist, von einem linearen Entzerrer (19) empfangen wird.

9. System nach einem der Ansprüche 6 bis 8, wobei jedes künstliche neuronale Netz des Satzes künstlicher neuronaler Netze parallelisiert und serialisiert ist.

10. System nach einem der Ansprüche 6 bis 9, wobei jedes künstliche neuronale Netz des Satzes künstlicher neuronaler Netze einen Satz von Ausdünnungs-Masken verwendet, um arithmetische Operationen zu reduzieren.

11. System nach einem der Ansprüche 6 bis 10, wobei jedes künstliche neuronale Netz des Satzes künstlicher neuronaler Netze einen Satz quantisierter Parameter verwendet, wobei die Parameter Gewichte sind, um arithmetische Multiplikationsoperationen unter Verwendung von Zweierpotenzen, additiven Zweierpotenzen, Dreierpotenzen, additiven Dreierpotenzen oder einer Variante davon zu reduzieren.

## Revendications

1. Procédé mis en œuvre par ordinateur pour entraîner un ensemble de réseaux neuronaux artificiels à effectuer une égalisation pour un système de fibre optique en temps réel, exécutée par au moins un processeur de calcul, dans lequel le procédé utilise l'au moins un processeur couplé à une mémoire stockant des instructions mettant en œuvre le procédé, dans lequel, les instructions, lorsqu'elles sont exécutées par l'au moins un processeur, réalisent les étapes du procédé, comprenant :
(a) l'initialisation (1010) pour chaque réseau neuronal artificiel de l'ensemble de réseaux neuronaux artificiels d'un ensemble de paramètres entraînables du réseau neuronal artificiel, dans lequel l'ensemble des paramètres entraînables comprend un ensemble de poids entraînables et un ensemble de biais entraînables ;
(b) l'entraînement (1020, 1030) de l'ensemble de paramètres entraînables à l'aide d'un ensemble de données d'entraînement, les données d'entraînement comprenant une entrée présentant une distorsion non linéaire résiduelle et une sortie dans laquelle cette distorsion est compensée, la sortie se présentant sous la forme de rapports de vraisemblance logarithmique (LLR) ;
(c) la génération d'un masque d'élagage sur la base de l'ensemble entraîné de paramètres entraînables ;
(d) la restauration (1050) de l'ensemble de paramètres entraînables ;
(e) l'élagage (1040) d'un ensemble sélectionné de paramètres entraînables sur la base du masque d'élagage ; et
(f) la répétition des étapes ci-dessus de (b) à (e) un certain nombre de fois pour générer un ensemble de réseaux neuronaux clairsemés présentant une parcimonie incrémentielle,
dans lequel le procédé comprend en outre : l'utilisation de l'ensemble de réseaux neuronaux artificiels pour effectuer une égalisation pour le système de fibre optique en temps réel,
dans lequel l'égalisation est réalisée par l'ensemble de réseaux neuronaux artificiels qui reçoivent une entrée présentant une distorsion non linéaire résiduelle et génèrent une sortie dans laquelle cette distorsion non linéaire résiduelle est compensée,
dans lequel la sortie prend la forme de rapports de vraisemblance logarithmique (LLR).

2. Procédé selon la revendication 1,
dans lequel les LLR sont introduits dans un décodeur à correction d'erreurs sans voie de retour (22) qui est suivi d'un analyseur de distribution inverse (11).

3. Procédé selon la revendication 1 ou 2,
dans lequel l'entrée présentant la distorsion non linéaire résiduelle est reçue d'un égaliseur linéaire (19).

4. Procédé selon l'une quelconque des revendications précédentes, dans lequel l'entraînement de chaque réseau neuronal artificiel de l'ensemble de réseaux neuronaux artificiels comprend en outre les étapes de :
l'introduction de l'ensemble de données d'apprentissage dans une pluralité de nœuds d'entrée du réseau neuronal artificiel ;
la propagation de l'ensemble de données d'apprentissage dans le réseau neuronal artificiel en fonction du masque d'élagage et des paramètres entraînables ; et
la génération d'un ensemble de valeurs de sortie à partir d'une pluralité de nœuds de sortie du réseau neuronal artificiel ;
le calcul d'un ensemble de valeurs de perte pour l'ensemble de données d'apprentissage sur la base de l'ensemble de valeurs de sortie ;
la mise à jour de l'ensemble de paramètres entraînables sur la base de l'ensemble de valeurs de perte par le biais d'une transmission de message en arrière ; et
la répétition des étapes ci-dessus un certain nombre d'itérations,
en particulier
a) dans lequel la mise à jour de l'ensemble de paramètres entraînables est fondée sur la descente de gradient stochastique, la rétropropagation résiliente, la propagation quadratique moyenne, l'algorithme de Broyden-Fletcher-Goldfarb-Shanno, l'optimisation adaptative du moment, le sous-gradient adaptatif, le delta adaptatif, ou une variante de ceux-ci, ou
b) dans lequel la mise à jour de l'ensemble des paramètres entraînables comprend en outre l'étape d'arrondissement des poids entraînables afin de quantifier des valeurs sur la base d'une puissance de deux, une somme de puissances de deux, une puissance de trois, une somme de puissances de trois, ou une variante de celles-ci.

5. Procédé selon l'une quelconque des revendications précédentes, dans lequel l'ensemble des valeurs de perte est fondé sur l'erreur quadratique moyenne, l'erreur absolue moyenne, l'entropie croisée, la perte de classification temporelle connexionniste, la vraisemblance logarithmique négative, la divergence de Kullback-Leibler, la perte de marge, la perte de classement, la perte d'intégration, la perte de Hinge, la perte de Huber, ou une variante de celles-ci.

6. Système déployé pour qu'un ensemble de réseaux artificiels réalise une égalisation pour un système de fibre optique en temps réel comprenant :
au moins une liaison d'interface (105) ;
au moins un processeur de calcul (120) ;
au moins une banque de mémoire (130) configurée pour au moins un ensemble entraîné de paramètres entraînables de chaque réseau neuronal artificiel de l'ensemble de réseaux artificiels, et un procédé d'entraînement et un procédé de test, dans lequel le procédé d'entraînement et le procédé de test utilisent l'au moins un processeur (120) couplé à l'au moins une banque de mémoire (130) stockant des instructions mettant en œuvre les procédés d'entraînement et de test, dans lequel les instructions, lorsqu'elles sont exécutées par l'au moins un processeur (120), réalisent les étapes des procédés, comprenant ;
le fait d'amener l'au moins un processeur (120) à exécuter le procédé d'entraînement et le procédé de test sur la base de l'au moins un ensemble entraîné de paramètres entraînables ;
(a) l'initialisation (1010) d'un ensemble de paramètres entraînables d'un réseau neuronal artificiel, dans lequel l'ensemble de paramètres entraînables comprend un ensemble de poids entraînables et un ensemble de biais entraînables ;
(b) l'entraînement (1020, 1030) de l'ensemble de paramètres entraînables à l'aide d'un ensemble de données d'entraînement, les données d'entraînement comprenant une entrée présentant une distorsion non linéaire résiduelle et une sortie dans laquelle cette distorsion est compensée, la sortie se présentant sous la forme de rapports de vraisemblance logarithmique (LLR) ;
(c) la génération d'un masque d'élagage sur la base de l'ensemble entraîné de paramètres entraînables ;
(d) la restauration (1050) de l'ensemble de paramètres entraînables ;
(e) l'élagage (1040) d'un ensemble sélectionné de paramètres entraînables sur la base du masque d'élagage ; et
(f) la répétition des étapes ci-dessus de (b) à (e) un certain nombre de fois pour générer un ensemble de réseaux neuronaux clairsemés présentant une parcimonie incrémentielle,
dans lequel les instructions, lorsqu'elles sont exécutées par l'au moins un processeur (120), réalisent en outre l'étape de : utilisation de l'ensemble de réseaux neuronaux artificiels pour réaliser une égalisation pour le système de fibre optique en temps réel,
dans lequel l'égalisation est réalisée par l'ensemble de réseaux neuronaux artificiels qui reçoivent une entrée présentant une distorsion non linéaire résiduelle et génèrent une sortie dans laquelle cette distorsion non linéaire résiduelle est compensée, dans lequel la sortie prend la forme de rapports de vraisemblance logarithmique (LLR).

7. Système selon la revendication 6, dans lequel les LLR sont fournis à un décodeur à correction d'erreurs sans voie de retour (22) qui est suivi d'un analyseur de distribution inverse (11).

8. Système selon la revendication 6 ou 7,
dans lequel l'entrée présentant la distorsion non linéaire résiduelle est reçue d'un égaliseur linéaire (19).

9. Système selon l'une quelconque des revendications 6 à 8, dans lequel chaque réseau neuronal artificiel de l'ensemble de réseaux neuronaux artificiels est parallélisé et sérialisé.

10. Système selon l'une quelconque des revendications 6 à 9, dans lequel chaque réseau neuronal artificiel de l'ensemble de réseaux neuronaux artificiels utilise un ensemble de masques d'élagage pour réduire les opérations arithmétiques.

11. Système selon l'une quelconque des revendications 6 à 10, dans lequel chaque réseau neuronal artificiel de l'ensemble de réseaux neuronaux artificiels utilise un ensemble de paramètres quantifiés, lesdits paramètres étant des poids, pour réduire les opérations de multiplication arithmétique en utilisant une puissance de deux, une somme de puissances de deux, une puissance de trois, une somme de puissances de trois, ou une variante de celles-ci.
